(19) Europäisches Patentamt
European Patent Office
Office européen des brevets

(11) **EP 4 036 827 A1**

(12) **EUROPEAN PATENT APPLICATION**

(43) Date of publication:
**03.08.2022 Bulletin 2022/31**

(21) Application number: **21305128.7**

(22) Date of filing: **29.01.2021**

(51) International Patent Classification (IPC):
**G06Q 10/08** (2012.01)   **G06Q 10/04** (2012.01)
**G06Q 10/02** (2012.01)

(52) Cooperative Patent Classification (CPC):
**G06Q 10/0836; G06Q 10/02; G06Q 10/04;
G06Q 10/087**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Quadient Technologies France
92220 Bagneux (FR)**

(72) Inventor: **POINTEAU, Stéphane
84300 CAVAILLON (FR)**

(74) Representative: **Cabinet Beau de Loménie
158, rue de l'Université
75340 Paris Cedex 07 (FR)**

(54) **METHOD FOR LOCALISING AN APPROPRIATE PARCEL LOCKER BANK HAVING A SUITABLE PARCEL LOCKER AVAILABLE TO STORE A PARCEL AND ASSOCIATED COMPUTERIZED LOCKER BANKS**

(57)     A computer-implemented method for determining whether a specific type of parcel lockers of a parcel locker bank (50) is available to store a parcel on a future day (j), said parcel locker bank (50) allowing a storage of a parcel in one of its parcel lockers (1-20) during a maximum number of days equal to a first integer number referenced N here after, the method comprising the following forecasting steps:
- receiving (100) the number of parcels already delivered or to be delivered to parcel lockers of said specific type of the parcel locker bank for each day between a day j and a day j-N+1, and receiving the number of parcels already announced to be delivered to parcel lockers of said specific type of the parcel locker bank (50) for each day between said day j and day j+N-1,
- calculating (120), for each day between day j to day j+N-1, a number of available parcel locker(s) of said specific type of said parcel locker bank (50) for each day of this time interval, said number being based on said received numbers and on pick-up rates of parcel from parcel lockers, said pick-up rates depending on the number of days a parcel which is still in a parcel locker has been stored for,
- comparing, for each day between day j and day j+N-1, said calculated number to a threshold, and
- indicating that a parcel locker is available for said parcel if each said compared number is bigger than said threshold.

| | |
|---|---|
| 100 | Reception of data |
| 110 | Estimation of partially available parcel lockers |
| 120 | Calculation of completely available parcel lockers |
| 130 | Comparison to trigger number |
| 140 | Indication of a parcel locker available |

**FIG.2**

EP 4 036 827 A1

**Description**

**Background of the invention**

The invention relates generally to parcel locker banks, also known as parcel pick-up stations, and in particular to forecasting the availability of a parcel locker of a specific type of a parcel locker bank, i.e. localising an appropriate parcel locker bank having a suitable parcel locker available to store a parcel.

One of the main specificity of deliveries to places else than a home, i.e. parcel locker banks, is the fact that there is a complete uncertainty on the moment the parcel will be picked-up from the parcel locker in which it is stored. It is therefore impossible to know if the parcel locker containing a parcel to be picked-up, is available or not and can be used for another delivery or not. This uncertainty is a problem, first for a carrier agent when he needs to plan a delivery of a parcel in a parcel locker bank because it would be unproductive to bring to a parcel locker bank a parcel which can finally not be stored in this parcel locker bank but also because waiting to get the information that a pick-up has occurred and therefore that a parcel locker is available is time consuming and also unproductive, and second, when a customer orders a parcel, as it is difficult and sometimes nearly impossible to offer a specific location and pick-up time to the customer.

Moreover, this uncertainty on the moment of pick-up generates a time lag between the moment the parcel is placed in the parcel locker and the moment the parcel is picked-up by the final recipient. This time lag generates a stock. Each parcel is stored during a finite time lapse which length is unknown.

Carriers are not able to propose any elaborate solution other than a booking solution, which is the safest solution but not the most optimal.

In document US 2018/190062 is known a computerized locker network comprising several locker banks, several portable computing devices and at least one logistic server, each locker bank comprising a computer bank computer and some selectively securable locker compartments with a door and a locking mechanism. This global system is configured to identify an available locker compartment of a locker bank to store a parcel after an unsuccessful attempt of delivery to a customer's home address.

Accordingly, there is a need for improved systems and processes to maximise the efficiency of a parcel locker bank by minimizing the risk of a delivery failure.

**Object and summary of the invention**

The invention aims to provide a computer-implemented method and a computerized system for forecasting a daily available capacity of a parcel locker bank and thus help maximise the efficiency of the parcel locker bank by minimizing the risk of a delivery failure.

A first object of the invention proposes a computer-implemented method for determining whether a specific type of parcel lockers of a parcel locker bank is available to store a parcel on a future day, said parcel locker bank comprising a plurality of selectively securable parcel lockers and allowing a storage of a parcel in one of its parcel lockers during a maximum number of days equal to a first integer number referenced N here after, said parcel locker bank comprising a second integer number of parcel lockers of said specific type.

The method comprises the following forecasting steps:

- receiving the number of parcels already delivered or to be delivered to parcel lockers of said specific type of the parcel locker bank for each day between said future day and a number of days before said future day equal to N-1, and receiving the number of parcels already announced to be delivered to parcel lockers of said specific type of the parcel locker bank for each day between said future day and a number of days after said future day equal to N-1,
- estimating, for each day, a third number corresponding to the number of remaining available parcel lockers of said specific type of said parcel locker bank on the day for which the calculation is made, each estimation being based on said received number of parcels already delivered or to be delivered to the parcel lockers up until the day before the day for which the estimation is made and on pick-up rates of parcel from parcel lockers, said pick-up rates depending on the number of days a parcel which is still in a parcel locker has been stored for,
- calculating, for each day from said future day up to the last day on which a parcel can be stored, a fourth number corresponding to the number of available parcel locker(s) of said specific type of said parcel locker bank for each day of this time interval, said fourth number being based on said corresponding third number and the received number of parcels already announced to be delivered to parcel lockers of said specific type of the parcel locker bank on the day for which the calculation is made,
- comparing, for each day from said future day up to the last day on which a parcel can be stored, said fourth number to a threshold, and
- indicating that a parcel locker is available for said parcel if each fourth number which has been compared is bigger than said threshold.

Such a method can be applied to any type of incoming parcel flows, such as second delivery packages when parcels a redirected to a parcel locker bank after a first home delivery attempt, direct parcels when a parcel locker is used to exchange a parcel between two e-merchants, or drop-off parcels when a merchant drops a parcel in a locker for a carrier to pick it up.

The pick-up rates can be based on a training group of data relating to pick-up rates previously observed on other parcel locker banks. These pick-up rates derived from the training group of data can be used to initiate the method and the system of the parcel locker bank.

Then, once a parcel locker bank is in use, the pick-up rates can be updated every day with the daily data relative to the parcels which have been picked up during the day and the parcel lockers which are still stored with a parcel as indicated in the following paragraph.

In a first aspect of the computer-implemented method, each pick-up rate is estimated by regression every day during closing hours of the parcel locker bank, the regression taking into account real pick-up rates for a number of previous days for which the pick-up rate is known, and taking into account if some of the days are holidays.

The main benefit from manipulating rates is its aggregation property. Indeed, given two lockers, one can calculate the pick-up rate for each machine but also for the couple of parcel lockers. This property avoids calculating the different pick-up rates for all couples of parcel locker and product.

An individual model is applied to high volume collection banks, for the rest, an aggregated model is enough, overflow problem does not arise.

Moreover, in the daily regression, the latest data collected regarding the pick-ups can be dealt in the regression with a higher weight than the older ones so as to have pick-up rates as close as possible to the current reality of pick-ups.

In a second aspect of the computer-implemented method, the method can further comprise, prior to the receiving step, a verification of the current availability of a specific type of parcel locker in a parcel locker bank, said parcel locker bank comprising an integer number higher than one of selectively securable parcel lockers, the verification comprising:

- assigning to each parcel locker of said parcel locker bank a digital address comprised between number one and a number equal to the integer number of parcel lockers,
- forming an availability mask by assigning to each digital address a first binary number if the parcel locker is empty and thus available and a second binary number different from the first binary number if the parcel locker comprises a parcel and is therefore unavailable, said availability mask being updated every time a parcel is stored in a parcel locker and every time a parcel is picked-up from a parcel locker,
- forming at least one specific accessibility mask relative to a specific feature of some parcel lockers of the parcel locker bank by assigning to each digital address a first binary number if the parcel locker has said specific feature and a second binary number if the parcel locker has not said specific feature, and
- determining, upon request, the number of available parcel lockers with at least one specific feature by combining said availability mask with the at least one accessibility mask relative to said specific feature(s) with a binary and operation.

The use of masks allows reducing the amount of data to deal with and thus speeding up the treatment of said data.

In a third aspect of the computer-implemented method, the specific features of the parcel lockers of said parcel locker bank can comprise:

- different size of parcel lockers,
- being assigned to a specific user such as a specific carrier agent,
- being assigned for storing a specific type of products contained in the parcels, such as products needing a specific storage temperature.

In a fourth aspect of the computer-implemented method, when the size of the parcel lockers is considered as a specific feature to take into account, the number of parcel lockers taken into account to check the availability of a parcel locker to store a given parcel corresponds to the number of parcel lockers having a size bigger than the size of said given parcel.

Thus, if the parcel to be stored in a parcel locker of a parcel locker bank is small, not only the small parcel lockers will be taken into account, but also all the parcel lockers with bigger dimensions.

A second subject matter of the invention proposes a computer-implemented method for localising an appropriate parcel locker bank having a suitable parcel locker available to store a parcel, said parcel locker bank comprising a first integer number higher than one of selectively securable parcel lockers each allowing a storage of a parcel during a maximum number of days equal to a second integer number, the method comprising:

- Receiving from a user, such as a carrier agent, a request to store a parcel in a parcel locker of a parcel locker bank, said request comprising a location in relation with the final receiver of the parcel, a desired delivery day corresponding to a future day from which the parcel should be stored in the parcel locker, and at least one specific feature relative to the parcel,
- determining the parcel locker banks situated inside a zone around the location indicated in the request, said zone having a predetermined fixed radius,
- determining all the parcel lockers from the parcel locker banks inside said zone in accordance with every specific feature indicated in the request,
- for a given number of days starting from said desired delivery day, and for each parcel locker bank previously determined, performing said method for determining whether a specific type of parcel lockers of a parcel locker bank is available to store a parcel on a future day as defined here above, and
- selecting the parcel locker bank having a suitable available parcel locker with the best compromise regarding the day of delivery and the localisation of said parcel locker bank.

A third subject matter of the invention proposes a parcel locker bank management system comprising at least one computerized parcel locker bank, said at least one computerized parcel locker bank comprising a plurality of selectively securable parcel lockers and allowing a storage of a parcel in one of its parcel lockers during a maximum number of days equal to a first integer number, said at least one computerized parcel locker bank further comprising at least one locker bank computer comprising at least one processor and memory configured to collect data relative to said at least one computerized parcel locker bank and transmit them outside said at least one computerized parcel locker bank, the number of parcel lockers being equal to a second integer number, each of the selectively securable parcel lockers comprising at least one door and at least one locking mechanisms, the parcel locker bank management system comprising a forecasting unit in communication with said locker bank computer of said at least one computerized parcel locker bank, said forecasting unit comprising:

- a receiving module configured to receive the number of parcels already delivered to parcel lockers of said specific type of the parcel locker bank for each day between a desired future day, and a number of days before said future day equal to N-1, and to receive the number of parcels already announced to be delivered to parcel lockers of said specific type of the parcel locker bank for each day between said future day and a number of days after said future day equal to N-1,
- a first calculating module configured to estimate, for each day, a third number corresponding to the number of remaining available parcel lockers of said specific type of said parcel locker bank on the day for which the calculation is made, each estimation being based on said received number of parcels already delivered or to be delivered to the parcel lockers on said desired future day and on pick-up rates of parcel from parcel lockers, said pick-up rates depending on the number of days a parcel which is still in a parcel locker has been stored for,
- a second calculating module configured to calculate, for each day from said future day up to the last day on which a parcel can be stored, a fourth number corresponding to the number of available parcel locker(s) of said specific type of said parcel locker bank, said fourth number being based on said corresponding third number and the received number of parcels already announced to be delivered to parcel lockers of said specific type of the parcel locker bank for each day in the time interval,
- a comparator configured to compare, for each day from said future day up to the last day on which a parcel can be stored, said fourth number to a threshold, and
- an output module configured to indicate that a parcel locker is available for said parcel if each fourth number which has been compared is bigger than said threshold.

In a first aspect of the parcel locker bank management system, said first calculating module comprises a regression module configured to estimate each pick-up rate by regression every day during closing hours of the parcel locker bank, the regression taking into account real pick-up rates for a number of previous days for which the pick-up rate is known from the information collected from the real pick-up dates for previously stored parcels, and taking into account if some of the days are holidays.

In a second aspect of the parcel locker management system, it can further comprise a verification module configured to:

- assign to each parcel locker of said parcel locker bank a digital address comprised between number one and a number equal to the integer number of parcel lockers,
- form an availability mask by assigning to each digital address a first binary number if the parcel locker is empty and thus available and a second binary number different from the first binary number if the parcel locker comprises a parcel and is therefore unavailable, said availability mask being updated every time a parcel is stored in a parcel locker and every time a parcel is picked-up from a parcel locker,

- forming at least one specific accessibility mask relative to a specific feature of some parcel lockers of the parcel locker bank by assigning to each digital address a first binary number if the parcel locker has said specific feature and a second binary number if the parcel locker has not said specific feature, and
- determine, upon request, the number of available parcel lockers with at least one specific feature by combining said availability mask with the at least one accessibility mask relative to said specific feature(s) with a binary and operation.

In a third aspect of the parcel locker bank management system, ait can further comprise a decision unit configured to direct one or more parcels to a suitable parcel locker bank, said decision unit comprising:

- a request module configured to receive from a user, such as a carrier agent, a request to store a parcel in a parcel locker of a parcel locker bank, said request comprising a location in relation with the final receiver of the parcel, a desired delivery day corresponding to a future day from which the parcel should be stored in the parcel locker, and at least one specific feature relative to the parcel,
- a selection module configured, first, to determine the parcel locker banks situated inside a zone around the location indicated in the request, said zone having a predetermined fixed radius, second, to determine all the parcel lockers from the parcel locker banks inside said zone in accordance with every specific feature indicated in the request, and third, to action said forecasting unit, for a given number of days starting from said desired delivery day, and for each parcel locker bank previously determined, and
- a transmitting module configured to deliver the indication of the parcel locker bank having a suitable available parcel locker with the best compromise regarding the day of delivery and the localisation of said parcel locker bank.

## Brief description of the drawings

The invention will be better understood by reading here after, as examples and in a non-limitative way, in reference to the enclosed drawings on which:

- Figure 1 is a schematic illustration of an example of a parcel locker bank;
- Figure 2 is a flow chart of a computer-implemented method for determining whether a specific type of parcel lockers of a parcel locker bank of figure 1 is available according to an embodiment of the invention;
- Figure 3 is a flow chart of a computer-implemented method for localising an appropriate parcel locker bank of figure 1 having a suitable parcel locker available to store a parcel according to an embodiment.
- Figure 4 is a flow chart of a verification step of the current availability of a specific type of parcel locker in a parcel locker bank, said verification step being performed before or during the method of figure 1.
- Figure 5 is a schematic view of a parcel locker bank management system comprising at least one computerized parcel locker bank of Figure 1.

## Detailed description of the embodiments

The present invention will be described with respect to particular embodiments and with reference to certain drawings but the invention is not limited thereto but only by the claims. The drawings described are only schematic and are non- limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

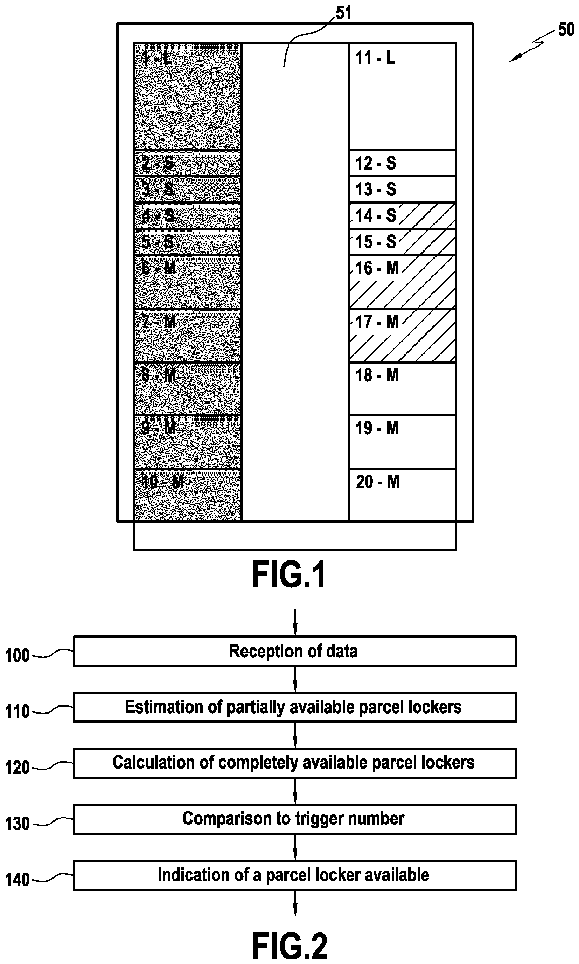

**Figure 1** illustrates schematically a parcel locker bank 50. The parcel locker bank 50 comprises a plurality of selectively securable parcel lockers each identified on the figure with a number comprised between 1 and 20. Each parcel locker has a one of three sizes, each size being identified on figure 2 by reference signs: S for the smallest size of parcel locker, L for the largest size of parcel locker, and M for the intermediate size between S and L, or medium size.

The parcel locker bank is configured to allow storage of a parcel in one of its parcel lockers during a maximum number of days equal to a first integer number referenced N here after, for example 4 days (N=4). If a parcel is still in the parcel locker after a number of days equal to said maximum number of days, the parcel is removed the next day by the carrier. This way parcel lockers do not get stuck with non-picked-up parcels.

The parcel locker bank 50 comprises a locker bank computer 51 comprising a processor and a memory configured to collect data relative to the parcel locker bank 50 and transmit them to a parcel locker bank management system 30. Each of the selectively securable parcel lockers 1 to 20 comprises a door and a locking mechanism.

In the embodiment of parcel locker bank illustrated in Figure 1, the parcel locker bank 50 has a first group of parcel lockers in light gray assigned only to a first user, a second group of parcel lockers which have been shaded assigned to a second user only, and a third group of parcel lockers in white which are shared between said first user and said second user.

**Figure 2** is a flow chart of a computer-implemented method for determining whether a specific type of parcel lockers of a parcel locker bank of figure 1 is available to store a parcel on a future day according to an embodiment of the invention.

In this embodiment, the parcel locker bank comprises a number P of parcel lockers of the desired specific type for which the method is performed.

The method is performed for a desired day to come, referenced j hereafter. Each parcel stored in said parcel locker bank 50 is allowed to be stored for a maximum number of days equal to N from the day on which the parcel is stored in the parcel locker. Therefore, a parcel is stored in a parcel locker from a storage day, such as said chosen future day j, and can be stored, at the longest, up to a day corresponding to day j+N-1 designated as the latest possible storage day.

As illustrated in figure 2, said method comprises the following steps. In a first step 100, is received the number of parcels already delivered or to be delivered to parcel lockers of said specific type of the parcel locker bank 50, for example parcel lockers 2 to 5 corresponding to small parcel lockers assigned to a particular carrier agent, for each day between said desired future day j and a number of days before said future day equal to N-1, i.e. down to day j-N+1, as well as for each day between the desired future day j and a number of days after said future day equal to N-1, i.e. up to day j+N-1.

In a second step 110, is estimated, for each day, a third number Dj* corresponding to the remaining available specific parcel lockers on the day j for which the calculation is made and before the deliveries due on that particular day j. In other words, the third number for a day j corresponds to the number of available parcel lockers of said specific type for day j considering only the parcels currently stored or announced to be delivered to a parcel locker of said specific type before day j, at a specific time such as 6 am. Each estimation is based on the numbers received in first step 100 corresponding to the number of parcels already delivered or to be delivered to the parcel lockers up until the day before the day for which the estimation is made and on pick-up rates of parcel from parcel lockers, said pick-up rates depending on the number of days a parcel has been stored for, for each parcel which is still in a parcel locker.

The third number Dj* is given by the following equation:

$$ Dj^* = P - \sum_{i=1}^{N-1} \left\{ Del_{j-i} \left( 1 - \sum_{k=1}^{i} PackRate_{j-k, j-i} \right) \right\} $$

with P corresponding to the maximum number of parcel lockers with the specific type considered comprised in the parcel locker bank 50, $Del_x$ corresponding to the number of deliveries of parcels to the parcel locker bank on day x, $PckRate_{y,z}$ the pick-up rate on day y among parcels delivered on day z, with day y being later than day z. $Del_x$ corresponds to deliveries, which already occurred or which are announced by carriers as due to be delivered for day x.

When a parcel locker bank is due to enter production regarding the forecast function, i.e. the method for determining whether a specific type of parcel lockers of a parcel locker bank of figure 1 is available to store a parcel on a future day, the pick-up rates, which are applied to the parcel locker bank, are based on a training group of data relating to pick-up rates previously observed on the same parcel locker bank or similar parcel locker banks. These pick-up rates derived from the training group of data are used to initiate the method when the parcel locker bank enters into production regarding the "forecast function". Then, once a parcel locker bank is in use in production, the pick-up rates are updated every day with the daily data relative to the flow of parcels relative to the parcel locker bank as indicated in the following paragraphs.

To train the system as regards pick-up rates, the parcel lockers are classified regarding the couple (locker, product), i.e. the type product stored in a given parcel locker, and the two following variables can be used for classification: total of deliveries and seniority. Thus, the models applied differ regarding the number of parcels delivered for a locker, and the age of the parcel locker.

For example, when the couple (locker, product) has a total of deliveries strictly higher than 365, an individual model is applied. Otherwise, it is assigned to a different model which aims to bring together the closest individuals, as it is assumed that parcel lockers next to each other and with the same partner are nearly similar.

Two couples of (locker, product) having a same model (other than an individual model), have the same training dataset. And so, the same pick-up rates.

Each pick-up rate is estimated by regression every day during closing hours of the parcel locker bank, the regression taking into account real pick-up rates for a number of previous days for which the pick-up rate is known, and taking into account if some of the days are holidays.

In a third step 120 is calculated, for each between day j and day j+N-1, a fourth number corresponding to the number of available parcel locker(s) of said specific type for each day of this time interval. The fourth number is based on the corresponding third number and the received number of parcels delivered or announced to be delivered by carriers to parcel lockers of said specific type of the parcel locker bank on the day for which the calculation is made. The fourth number thus corresponds to the number of available parcel lockers of said specific type taking into account every parcel already stored and every parcel planned to be stored for every day comprised in the time interval during which a parcel can be stored if stored on day j, i.e. during the N days a parcel can be stored in a parcel locker of the parcel locker bank.

The fourth number Dj is given by the following equation: $D_j = D_j^* - Del_j - 1$ for said desired day j

$$D_{j+k} = D_{j+k}^* - Del_{j+k} - \left(1 - \sum_{i=1}^{k} PackRate_{j+k-i,j+k-i}\right)$$ for days comprised between day j+1 and day j+N-1

k being a calculation parameter, k being an integer number as calculations are made for each day.

In a fourth step 130, for each day from said desired day j up to the last day on which a parcel can be stored, day j+N-1, said fourth number is compared to a threshold $\tau$.

In a fifth step 140, if each fourth number which has been compared is bigger than said threshold, an indication is given out to signal that a parcel locker is available for said parcel in said parcel locker bank 50. In other words the indication is sent if:

$D_j > \tau$ and $D_{j+1} > \tau$ and $D_{j+2} > \tau$ ... and $D_{j+N-1} > \tau$

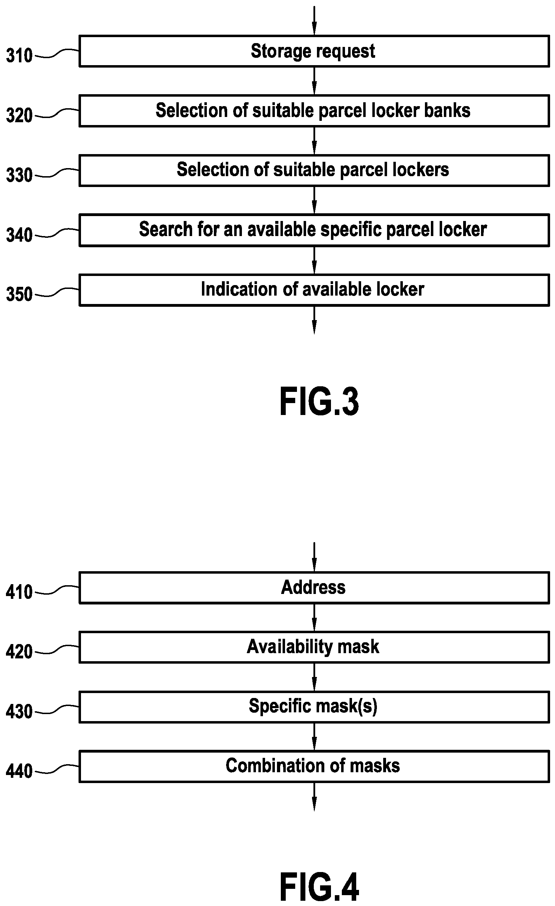

**Figure 3** is a flow chart of a computer-implemented method for localising an appropriate parcel locker bank, such as parcel locker bank of figure 1, having a suitable parcel locker available to store a parcel.

In a first step 310 of the method, a request to store a parcel in a parcel locker of a parcel locker bank 50 is received from a user, such as a carrier agent, said request comprising a location in relation with the final receiver of the parcel, a desired delivery day j corresponding to a future day from which the parcel should be stored in the parcel locker, and at least one specific feature relative to the parcel such as a specific size of a parcel, a specific user such as a specific carrier agent, a specific type of product requiring specific storage conditions.

In a second step 320 is determined which parcel locker banks are situated inside a zone around the location indicated in the request, said zone having a predetermined fixed radius.

In a third step 330 is determined which parcel lockers from the parcel locker banks inside said zone are in accordance with every specific feature indicated in the request.

In a fourth step 340 is performed the method of figure 2 for determining whether a specific type of parcel lockers of a parcel locker bank is available to store a parcel on a future day, this method being performed for a given number of days starting from said desired delivery day, and for each parcel locker bank previously determined.

When dealing with the size, a parcel locker is considered suitable to hold the parcel if the size is big enough to hold the parcel inside. In this sense, some priorities are defined between sizes. Thus, for a small parcel, the availability check will be made first with the small sized parcel lockers, then, if no small parcel lockers are available, with the medium sized parcel lockers, and finally, if no medium sized parcel lockers are available, with the large sized parcel lockers.

Other priorities can be defined between the different specificities. For example, accessible zones could be sorted first by sizes of parcel lockers, then by assigned zones (parcel lockers assigned to the user first, and then parcel lockers shared between different users), and then by comfort zones.

In a fifth step 350, the parcel locker bank closest to the destination and having a suitable available parcel locker on the desired day j is selected.

In the methods illustrated in figures 2 and 3, estimations and calculations are made on a daily basis, i.e. that every Pick-up rate is given for one day, and that every number relative to deliveries or pick-ups is given for one day.

It has been observed that, during the phase for parcel delivery, which occurs at the beginning of the day, usually between 7am and 4pm, there is no (or rather limited) new availabilities of parcel lockers. A parcel locker were a parcel was delivered during the day or the days before does not become available until 5pm. Thus daily modelling before the delivery phase, such as at 6am for example, is enough.

**Figure 4** is a flow chart of a verification step of the current availability of a specific type of parcel locker in a parcel locker bank, said verification step being performed before or during the method of figure 1.

The verification step comprises a first sub-step 410 wherein each parcel locker of the parcel locker bank is assigned a digital address comprised between number one and a number equal to the integer number of parcel lockers.

It comprises a second sub-step 420 herein an availability mask is formed by assigning to each digital address a first binary number if the parcel locker is empty and thus available and a second binary number different from the first binary number if the parcel locker comprises a parcel and is therefore unavailable, said availability mask being updated every time a parcel is stored in a parcel locker and every time a parcel is picked-up from a parcel locker.

In a third sub-step 430 a specific accessibility mask is formed for each specific feature that some parcel lockers might have by assigning to each digital address a first binary number if the parcel locker has said specific feature and a second binary number if the parcel locker has not said specific feature.

For example, a first group of accessibility masks can be formed regarding the sizes of the parcel lockers, each accessibility mask of the first group being formed for a specific size of parcel lockers such as small, medium and large. For example, a group of accessibility masks can be formed regarding parcel lockers assigned to a particular user such as a particular carrier agent, a first mask of this second group being formed for parcel lockers assigned only to a first user, a second mask of this second group being formed for parcel lockers assigned only to a second user, and a third mask of this second group being formed for parcel lockers assigned to a both first and second users, both users being allowed to use these parcel lockers. Other groups of accessibility masks, relative to comfort zones for example, can be formed depending on the specificities desired.

Each mask forms a string of binary numbers, each char of the string representing a parcel locker of the parcel locker bank. Each mask defines thus segments of the parcel locker bank, and the combination with AND gates of the different mask allows for defining specific segments of parcel lockers of the parcel locker bank, these parcel lockers corresponding to the specific type of parcel lockers desired.

In a fourth sub-step 440, upon request, the number of available parcel lockers with at least one specific feature is determined by combining said availability mask with the at least one accessibility mask relative to said specific feature(s) with an AND gate.

The combination of the different accessibility masks defining the specific type of parcel locker desired and the availability mask with AND gates allows defining easily the availability of the parcel lockers of said specific type.

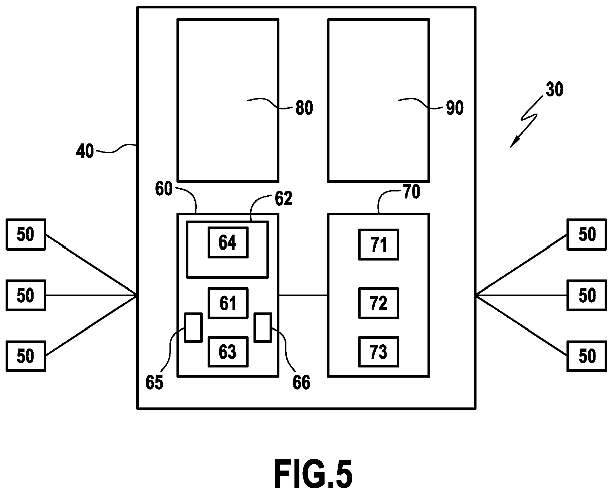

**Figure 5** is a schematic view of a parcel locker bank management system 30 comprising at least one computerized parcel locker bank 50 as defined in Figure 1. The parcel locker bank management system comprises a central device 40 comprising a forecasting unit 60, a decision unit 70 and a data storage unit 80, the central device 40 and its units 60, 70 and 80 being in communication with the locker bank computers of the parcel locker banks 50.

The data storage unit 80 is configured to receive and store all the information sent by the at least one computerized parcel locker bank 50.

The forecasting unit 60 is configured to process the computer-implemented method for allocating one or more parcels to a suitable parcel locker bank 50 of a network of parcel locker banks of figure 3. For this purpose, the forecasting unit 60 comprises a receiving module 61, a first calculating module 62, a second calculating module 63, a regression module 64, a comparator 65 and an output module 66.

The receiving module 61 is configured to receive, from the data storage unit 80, the number of parcels already delivered to parcel lockers of said specific type of the parcel locker bank for each day between a desired future day j, and a number of days before said future day j equal to N-1, and to receive the number of parcels already announced to be delivered to parcel lockers of said specific type of the parcel locker bank 50 for each day between said future day j and a number of days after said future day j equal to N-1.

The first calculating module 62 is configured to estimate the third number Dj* and the second calculating module 63 is configured to calculate the fourth number Dj.

The first calculating module 62 comprises a regression module 64 configured to estimate each pick-up rate by regression every day during closing hours of the parcel locker bank, the regression taking into account real pick-up rates for a number of previous days for which the pick-up rate is known from the information collected from the real pick-up dates for previously stored parcels, and taking into account if some of the days are holidays.

The comparator 65 is configured to compare, for each day from said future day j up to the last day on which a parcel can be stored j+N-1, said fourth number to a threshold, and the output unit 66 is configured to indicate that a parcel locker is available on day j and will remain available for said parcel if each fourth number being compared is larger than said threshold.

The decision unit 70 is configured to direct each parcel for which a request has been made to a suitable parcel locker bank 50. The decision unit 70 comprises a request module 71, a selection module 72, and a transmission module 73.

The request module 71 is configured to receive from a user, such as a carrier agent, a request to store a parcel in a parcel locker of a parcel locker bank, said request comprising a location in relation with the final receiver of the parcel, a desired delivery day j corresponding to a future day from which the parcel should be stored in the parcel locker, and at least one specific feature relative to the parcel.

The selection module 72 is configured, first, to determine the parcel locker banks situated inside a zone around the location indicated in the request, said zone having a predetermined fixed radius, second, to determine all the parcel lockers from the parcel locker banks inside said zone in accordance with every specific feature indicated in the request, and third, to action said forecasting unit, for a given number of days starting from said desired delivery day j, and for each parcel locker bank 50 previously determined.

The transmitting module 73 is configured to deliver the indication of the parcel locker bank closest to the destination address and having a suitable available parcel locker on the desired day j.

The parcel locker bank management system 30 also comprises a verification module 90 configured to assign to each parcel locker of said parcel locker bank 50 a digital address comprised between 1 and 20 in the embodiment described here, form an availability mask by assigning to each digital address a first binary number if the parcel locker is empty and thus available and a second binary number different from the first binary number if the parcel locker comprises a parcel and is therefore unavailable, said availability mask being updated every time a parcel is stored in a parcel locker and every time a parcel is picked-up from a parcel locker, forming at least one specific accessibility mask relative to a specific feature of some parcel lockers of the parcel locker bank 50 by assigning to each digital address a first binary number if the parcel locker has said specific feature and a second binary number if the parcel locker has not said specific feature, and determine, upon request, the number of available parcel lockers with at least one specific feature by combining said availability mask with the at least one accessibility mask relative to said specific feature(s) with a binary and operation.

The invention provides a computer-implemented method and a computerized system for forecasting a daily available capacity of a parcel locker bank and thus help maximise the efficiency of the parcel locker bank by minimizing the risk of a delivery failure.

## Claims

1.  A computer-implemented method for determining whether a specific type of parcel lockers of a parcel locker bank (50) is available to store a parcel on a future day (j), said parcel locker bank (50) comprising a plurality of selectively securable parcel lockers (1-20) and allowing a storage of a parcel in one of its parcel lockers (1-20) during a maximum number of days equal to a first integer number referenced N here after, said parcel locker bank (50) comprising a second integer number (P) of parcel lockers of said specific type, the method comprising the following forecasting steps:

    - receiving (100) the number of parcels already delivered or to be delivered to parcel lockers of said specific type of the parcel locker bank for each day between said future day (j) and a number of days before said future day (j) equal to N-1, and receiving the number of parcels already announced to be delivered to parcel lockers of said specific type of the parcel locker bank (50) for each day between said future day (j) and a number of days after said future day (j) equal to N-1,
    - estimating (110), for each day, a third number (Dj*) corresponding to the remaining available parcel lockers of said specific type of said parcel locker bank (50) on the day for which the calculation is made, each estimation being based on said received number of parcels already delivered or to be delivered to the parcel lockers up until the day before the day for which the estimation is made and on pick-up rates of parcel from parcel lockers, said pick-up rates depending on the number of days a parcel which is still in a parcel locker has been stored for,
    - calculating (120), for each day from said future day (j) up to the last day on which a parcel can be stored (j+N-1), a fourth number (Dj) corresponding to the number of available parcel locker(s) of said specific type of said parcel locker bank (50) for each day of this time interval, said fourth number (Dj) being based on said corresponding third number and the received number of parcels already announced to be delivered to parcel lockers of said specific type of the parcel locker bank on the day for which the calculation is made,
    - comparing, for each day from said future day (j) up to the last day on which a parcel can be stored (j+N-1), said fourth number to a threshold, and
    - indicating that a parcel locker is available for said parcel if each fourth number which has been compared is bigger than said threshold.

2.  The computer-implemented method according to claim 1, wherein each pick-up rate is estimated by regression every day during closing hours of the parcel locker bank, the regression taking into account real pick-up rates for a number of previous days for which the pick-up rate is known, and taking into account if some of the days are holidays.

3.  The computer-implemented method according to any of claims 1 or 2, further comprising, prior to the receiving step, a verification of the current availability of a specific type of parcel locker in a parcel locker bank (50), said parcel locker bank (50) comprising an integer number higher than one of selectively securable parcel lockers (1-20), the verification comprising:

- assigning to each parcel locker (1-20) of said parcel locker bank (50) a digital address comprised between number one and a number equal to said second integer number (P) of parcel lockers (1-20),
- forming an availability mask by assigning to each digital address a first binary number if the parcel locker is empty and thus available and a second binary number different from the first binary number if the parcel locker comprises a parcel and is therefore unavailable, said availability mask being updated every time a parcel is stored in a parcel locker (1-20) and every time a parcel is picked-up from a parcel locker (1-20),
- forming at least one specific accessibility mask relative to a specific feature of some parcel lockers (1-20) of the parcel locker bank (50) by assigning to each digital address a first binary number if the parcel locker has said specific feature and a second binary number if the parcel locker has not said specific feature, and
- determining, upon request, the number of available parcel lockers with at least one specific feature by combining said availability mask with the at least one accessibility mask relative to said specific feature(s) with a binary and operation.

4. The computer-implemented method according to any of claims 1 to 3, wherein the specific features of the parcel lockers of said parcel locker bank comprise:

- different size of parcel lockers,
- being assigned to a specific user such as a specific carrier agent,
- being assigned for storing a specific type of products contained in the parcels, such as products needing a specific storage temperature.

5. The computer-implemented method according to claim 5, wherein when the size of the parcel lockers is considered as a specific feature to take into account, the number of parcel lockers taken into account to check the availability of a parcel locker to store a given parcel corresponds to the number of parcel lockers having a size bigger than the size of said given parcel.

6. A computer-implemented method for localising an appropriate parcel locker bank (50) having a suitable parcel locker available to store a parcel, said parcel locker bank (50) comprising a first integer number (M) higher than one of selectively securable parcel lockers (1-20) each allowing a storage of a parcel during a maximum number of days equal to a second integer number (N), the method comprising:

- receiving (300) from a user, such as a carrier agent, a request to store a parcel in a parcel locker of a parcel locker bank, said request comprising a location in relation with the final receiver of the parcel, a desired delivery day (j) corresponding to a future day from which the parcel should be stored in the parcel locker, and at least one specific feature relative to the parcel,
- determining the parcel locker banks situated inside a zone around the location indicated in the request, said zone having a predetermined fixed radius,
- determining all the parcel lockers from the parcel locker banks inside said zone in accordance with every specific feature indicated in the request,
- for a given number of days starting from said desired delivery day (j), and for each parcel locker bank (50) previously determined, performing said method for determining whether a specific type of parcel lockers of a parcel locker bank (50) is available to store a parcel on a future day (j) according to any claim 1 to 5, and
- selecting the parcel locker bank having a suitable available parcel locker with the best compromise regarding the day of delivery and the localisation of said parcel locker bank (50).

7. A parcel locker bank management system (30) comprising at least one computerized parcel locker bank (50), said at least one computerized parcel locker bank (50) comprising a plurality of selectively securable parcel lockers (1-20) and allowing a storage of a parcel in one of its parcel lockers during a maximum number of days equal to a first integer number (N), said at least one computerized parcel locker bank (50) further comprising at least one locker bank computer (51) comprising at least one processor and memory configured to collect data relative to said at least one computerized parcel locker bank (50) and transmit them outside said at least one computerized parcel locker bank (50), the number of parcel lockers being equal to a second integer number (P), each of the selectively securable parcel lockers comprising at least one door and at least one locking mechanisms, the parcel locker bank management system (30) comprising a forecasting unit (60) in communication with said locker bank computer (51) of said at least one computerized parcel locker bank (50), said forecasting unit (60) comprising:

- a receiving module (61) configured to receive the number of parcels already delivered to parcel lockers of said specific type of the parcel locker bank for each day between a desired future day (j), and a number of days before said future day (j) equal to N-1, and to receive the number of parcels already announced to be delivered to parcel lockers of said specific type of the parcel locker bank (50) for each day between said future day (j) and a number of days after said future day (j) equal to N-1,

- a first calculating module (62) configured to estimate, for each day, a third number (Dj*) corresponding to the number of remaining available parcel lockers of said specific type of said parcel locker bank (50) on the for which the calculation is made, each estimation being based on said received number of parcels already delivered or to be delivered to the parcel lockers on said desired future day and on pick-up rates of parcel from parcel lockers, said pick-up rates depending on the number of days a parcel which is still in a parcel locker has been stored for,

- a second calculating module (63) configured to calculate, for each day from said future day (j) up to the last day on which a parcel can be stored (j+N-1), a fourth number (Dj) corresponding to the number of available parcel locker(s) of said specific type of said parcel locker bank (50), said fourth number (Dj) being based on said corresponding third number (Dj*) and the received number of parcels already announced to be delivered to parcel lockers of said specific type of the parcel locker bank for each day in the time interval,

- a comparator configured to compare, for each day from said future day (j) up to the last day on which a parcel can be stored (j+N-1), said fourth number to a threshold, and

- an output module configured to indicate that a parcel locker is available for said parcel if each fourth number which has been compared is bigger than said threshold.

8. The parcel locker bank management system (30) according to claim 7, wherein said first calculating module (62) comprises a regression module (64) configured to estimate each pick-up rate by regression every day during closing hours of the parcel locker bank, the regression taking into account real pick-up rates for a number of previous days for which the pick-up rate is known from the information collected from the real pick-up dates for previously stored parcels, and taking into account if some of the days are holidays.

9. The parcel locker bank management system (30) according to any of claims 7 or 8, comprising a verification module (90) configured to:

- assign to each parcel locker (1-20) of said parcel locker bank (50) a digital address comprised between number one and a number equal to the integer number (P) of parcel lockers (1-20),

- form an availability mask by assigning to each digital address a first binary number if the parcel locker is empty and thus available and a second binary number different from the first binary number if the parcel locker comprises a parcel and is therefore unavailable, said availability mask being updated every time a parcel is stored in a parcel locker (1-20) and every time a parcel is picked-up from a parcel locker (1-20),

- forming at least one specific accessibility mask relative to a specific feature of some parcel lockers (1-20) of the parcel locker bank (50) by assigning to each digital address a first binary number if the parcel locker has said specific feature and a second binary number if the parcel locker has not said specific feature, and

- determine, upon request, the number of available parcel lockers with at least one specific feature by combining said availability mask with the at least one accessibility mask relative to said specific feature(s) with a binary and operation.

10. The parcel locker bank management system (30) according to any of claims 7 to 9, further comprising a decision unit (70) configured to direct one or more parcels to a suitable parcel locker bank (50), said decision unit (70) comprising:

- a request module (71) configured to receive from a user, such as a carrier agent, a request to store a parcel in a parcel locker of a parcel locker bank, said request comprising a location in relation with the final receiver of the parcel, a desired delivery day (j) corresponding to a future day from which the parcel should be stored in the parcel locker, and at least one specific feature relative to the parcel,

- a selection module (72) configured, first, to determine the parcel locker banks situated inside a zone around the location indicated in the request, said zone having a predetermined fixed radius, second, to determine all the parcel lockers from the parcel locker banks inside said zone in accordance with every specific feature indicated in the request, and third, to action said forecasting unit, for a given number of days starting from said desired delivery day (j), and for each parcel locker bank (50) previously determined, and

- a transmitting module (73) configured to deliver the indication of the parcel locker bank having a suitable available parcel locker with the best compromise regarding the day of delivery and the localisation of said parcel locker bank (50).

51 / 50

| | | |
|---|---|---|
| 1 - L | | 11 - L |
| 2 - S | | 12 - S |
| 3 - S | | 13 - S |
| 4 - S | | 14 - S |
| 5 - S | | 15 - S |
| 6 - M | | 16 - M |
| 7 - M | | 17 - M |
| 8 - M | | 18 - M |
| 9 - M | | 19 - M |
| 10 - M | | 20 - M |

# FIG.1

100 — Reception of data

110 — Estimation of partially available parcel lockers

120 — Calculation of completely available parcel lockers

130 — Comparison to trigger number

140 — Indication of a parcel locker available

# FIG.2

310 — Storage request

320 — Selection of suitable parcel locker banks

330 — Selection of suitable parcel lockers

340 — Search for an available specific parcel locker

350 — Indication of available locker

# FIG.3

410 — Address

420 — Availability mask

430 — Specific mask(s)

440 — Combination of masks

# FIG.4

FIG.5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2018/190062 A1 (ROBINSON KALIN [US]) 5 July 2018 (2018-07-05) * abstract * * paragraph [0041] - paragraph [0099] * * figures 1-6 * | 1-10 | INV. G06Q10/08 G06Q10/04 G06Q10/02 |
| X | WO 01/73620 A2 (SAP AG) 4 October 2001 (2001-10-04) * abstract * * page 6, line 17 - page 8, line 21 * * page 24, line 2 - page 26, line 3 * * page 36, line 12 - page 40, line 21 * * figures 1-10 * | 1-10 | |
| A | WO 2011/109583 A2 (SIX CONTINENTS HOTELS INC [US]; GONZALEZ DARIO [US] ET AL.) 9 September 2011 (2011-09-09) * abstract * * paragraph [0027] - paragraph [0029] * * paragraph [0038] * | 3,9 | |

**TECHNICAL FIELDS SEARCHED (IPC)**

G06Q

The present search report has been drawn up for all claims

| Place of search | Date of completion of the search | Examiner |
|---|---|---|
| The Hague | 5 July 2021 | Cîrstet, Andrei |

## ANNEX TO THE EUROPEAN SEARCH REPORT
## ON EUROPEAN PATENT APPLICATION NO.

EP 21 30 5128

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2021

| Patent document cited in search report | | Publication date | Patent family member(s) | | Publication date |
|---|---|---|---|---|---|
| US 2018190062 | A1 | 05-07-2018 | NONE | | |
| WO 0173620 | A2 | 04-10-2001 | AU | 771415 B2 | 18-03-2004 |
| | | | CA | 2373913 A1 | 04-10-2001 |
| | | | EP | 1299832 A2 | 09-04-2003 |
| | | | JP | 2003529159 A | 30-09-2003 |
| | | | JP | 2012048743 A | 08-03-2012 |
| | | | US | 2002007293 A1 | 17-01-2002 |
| | | | WO | 0173620 A2 | 04-10-2001 |
| WO 2011109583 | A2 | 09-09-2011 | AU | 2011223654 A1 | 04-10-2012 |
| | | | BR | 112012022439 A2 | 05-07-2016 |
| | | | CA | 2792154 A1 | 09-09-2011 |
| | | | CN | 103069445 A | 24-04-2013 |
| | | | CN | 109063153 A | 21-12-2018 |
| | | | EP | 2543007 A2 | 09-01-2013 |
| | | | JP | 5951051 B2 | 13-07-2016 |
| | | | JP | 2013527945 A | 04-07-2013 |
| | | | JP | 2015111444 A | 18-06-2015 |
| | | | KR | 20120139775 A | 27-12-2012 |
| | | | KR | 20160054017 A | 13-05-2016 |
| | | | RU | 2012142304 A | 10-04-2014 |
| | | | SG | 183919 A1 | 30-10-2012 |
| | | | TW | 201203155 A | 16-01-2012 |
| | | | US | 2011218830 A1 | 08-09-2011 |
| | | | WO | 2011109583 A2 | 09-09-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018190062 A